# FASCICULE DE BREVET EUROPEEN

(11) **EP 1 907 161 B1**
(45) Date de publication et mention de la délivrance du brevet: **28.09.2011**
(21) Numéro de dépôt: 06764725.5
(22) Date de dépôt: 02.06.2006
(51) Int. Cl.: B23K 26/14, B23K 26/28, B23K 9/028, B23K 26/04

(54) **PROCEDE ET DISPOSITIF DE SOUDAGE COMBINANT UN FAISCEAU LASER ET L'ARC ELECTRIQUE AVEC ELECTRODE FUSIBLE POUR ASSEMBLER DES CONDUITS METALLIQUES MIS BOUT A BOUT POUR FORMER DES CANALISATIONS METALLIQUES DU TYPE PIPELINE**
EINEN LASERSTRAHL MIT DEM ELEKTRISCHEN LICHTBOGEN KOMBINIERENDES SCHWEISSVERFAHREN UND -VORRICHTUNG MIT EINER ABSCHMELZBAREN ELEKTRODE ZUM ZUSAMMENBAU VON ANEINANDERSTOSSENDEN METALLLEITUNGEN ZUR BILDUNG VON ROHRLEITUNGSROHREN AUS METALL
PROCESS OF AND DEVICE FOR WELDING COMBINING A LASER BEAM AND THE ELECTRIC ARC WITH A CONSUMABLE ELECTRODE FOR ASSEMBLING ABUTTING METAL CONDUITS TO FORM PIPELINE METAL PIPES

(30) Priorité: 02.06.2005 FR 0505605
(43) Date de publication de la demande: 09.04.2008
(73) Titulaire: Serimax, 77290 Mitry-Mory (FR); Institut de Soudure, 93420 Villepinte (FR)
(72) Inventeur: RICHARD, Gilles, F-60330 Silly le Long (FR); CHEHAIBOU, Abdelkrim, F-57070 Metz (FR)
(74) Mandataire: Fosse, Danièle
(86) Numéro de dépôt international: PCT/FR2006/001258
(87) Numéro de publication internationale: WO 2006/129024

(56) Documents cités:
- WO-A-2005/056230
- DE-A1- 10 304 709
- DE-A1- 19 849 117
- FR-A- 2 812 227
- FR-A- 2 832 337
- US-A1- 2002 060 211
- PATENT ABSTRACTS OF JAPAN vol. 2003, no. 11, 5 novembre 2003 (2003-11-05) -& JP 2003 205378 A (DAIHEN CORP), 22 juillet 2003 (2003-07-22)

## Description

La présente invention concerne un procédé et un dispositif de soudage, en particulier de pièces tubulaires telles que des conduits métalliques mis bout à bout pour former des canalisations métalliques du type pipeline, destinées au transport de gaz, de pétrole conformément au préambule des revendications 1 et 3 (voir, par example, FR 2 832 337)

Pour former des canalisations de type pipeline, il est important que la soudure réalisée entre deux conduits présente les qualités requises au transport des matières telles que le pétrole, le gaz, la soudure ne devant donc pas présenter de défauts risquant d'entraîner des faiblesses.

Pour réaliser le joint de soudure de manière fiable, on a proposé d'utiliser un procédé de soudage au laser. Toutefois, les différents procédés de soudage au laser et dispositifs pour leur mise en oeuvre présentent de nombreux inconvénients.

Ainsi, selon EP 706 849 la source laser est éloignée du dispositif de focalisation et il est nécessaire de prévoir de nombreux jeux de miroirs pour faire tourner le ou les faisceaux laser autour de la circonférence à souder, conduisant de ce fait à une structure complexe, nécessitant un réglage minutieux et précis, peu fiable et qui entraîne souvent un problème d'échauffement des miroirs. De plus, le dispositif de soudage au laser est positionné à l'intérieur des conduits, ce qui implique un équipement spécifique complexe et coûteux, de maintenance délicate.

Dans le document FR 2 812 227, on propose un dispositif de soudage au laser dont le groupe générateur d'énergie électrique est porté par un véhicule externe, le faisceau laser se plaçant orbitalement et présentant une puissance très élevée supérieure à 4 kW. Un tel dispositif nécessite donc une puissance importante ce qui n'est pas économiquement viable.

On a pu constater également que, lorsque le laser est utilisé seul pour réaliser le soudage, on obtient une très faible tolérance sur les conditions d'accostage, notamment lorsqu'on constate la présence de jeu. En outre, la quantité de métal d'apport étant faible ou nulle, il en résulte une très forte dépendance par rapport aux compositions de métal de base des conduits à souder en ce qui concerne les caractéristiques mécaniques de la soudure obtenue. Il n'est en effet pas possible d'améliorer ces caractéristiques mécaniques en jouant sur la composition chimique du métal d'apport et sur la vitesse d'amenée de ce métal d'apport (taux de dépôt), ce qui entraîne une baisse de la dureté et une augmentation de la ténacité.

Dans le document EP 0 852 984, on a proposé un procédé de soudage à l'arc et au laser combiné. En particulier, on propose de réaliser d'abord un soudage à l'arc à l'intérieur des conduits suivi d'un soudage laser à l'extérieur ou bien, d'abord un soudage laser à l'extérieur suivi d'un soudage à l'arc à l'intérieur. Le procédé proposé nécessite donc l'utilisation de deux dispositifs de soudage indépendants, un à l'intérieur et l'autre à l'extérieur, ce qui entraîne un coût très élevé.

Le document W02005/056230 publié après la date de priorité de la présente demande et avant sa date de dépôt, décrit un procédé de soudage au laser dans lequel on associe une tête de soudage à l'arc électrique MSG à la tête de soudage au laser. Cette tête de soudage à l'arc électrique MSG peut être orientée pour agir avec la tête laser dans la zone de soudure au laser ou bien être orientée de manière à suivre la tête laser. Cependant, le dispositif de mise en oeuvre de ce procédé de soudage ne prévoit pas, lors de la passe de pénétration de pouvoir régler indépendamment les uns des autres, la position du point de focalisation du faisceau laser, l'intervalle entre le point de focalisation du faisceau laser et la position du point d'impact de l'arc électrique ainsi que la position angulaire de la torche de soudage MIG par rapport au faisceau laser.

On connaît par FR 2 832 337, un procédé de soudage au laser hybride. Il est mentionné que le faisceau laser focalise sur une partie des pièces constituée d'un bain de métal en fusion et que l'arc électrique est formé entre l'électrode fusible et les pièces à souder au niveau du bain de métal en fusion, les deux moyens de soudage laser et MIG convergeant vers un même bain de métal en fusion. Cependant, le bain de fusion est d'abord créé par la fusion de la pièce à souder de manière classique par l'arc électrique. Un procédé de ce type est également décrit dans JP 2003205378.

De même, on connaît par DE 198 49 117 un procédé de soudage au laser avec deux procédés MIG permettant de réaliser une soudure sur des joints très larges. On y décrit la possibilité de régler indépendamment les dispositifs de soudage tout en restant dans un schéma de fonctionnement connu tel qu'évoqué plus haut.

Dans DE 103 04 709 est décrit un procédé de soudage laser hydride réalisé à l'aide d'une tête de soudage portant un faisceau laser et des moyens de soudage à l'arc électrique. Le faisceau laser et l'arc électrique agissent dans la même zone de soudage, toutefois la tête de soudage à l'arc étant positionnée devant le faisceau laser dans la direction de passe, elle agit donc avant lui créant le bain de fusion sur lequel il agit ensuite.

Par ailleurs, aucun des procédés et dispositifs décrits ci-dessus ne permet à l'heure actuelle de pouvoir régler des paramètres tels que position de l'extrémité du fil électrode MIG par rapport au point de focalisation du faisceau laser ou position angulaire de la torche MIG par rapport au faisceau laser au cours d'un cycle de soudage, le réglage n'étant possible qu'hors soudage.

L'invention se propose de pallier ses inconvénients en proposant un nouveau procédé de soudage dans lequel on associe la puissance du soudage laser pour la passe de pénétration à celle du soudage à l'arc électrique par électrode fusible, ledit procédé présentant une vitesse de soudage largement améliorée tout en utilisant une faible puissance laser et en présentant une structure relativement simple.

A cet effet, l'invention a pour objet un procédé de soudage, en particulier de pièces tubulaires telles que des conduits métalliques mis bout à bout pour former des canalisations métalliques du type pipeline tel que défini dans la revendication 1.

Ainsi de manière très avantageuse, le procédé selon l'invention permet de conserver une vitesse de soudage élevée de plusieurs mètres par minute tout en utilisant une puissance laser relativement faible, notamment inférieure à 4 kW, grâce à l'apport de puissance du procédé à l'arc électrique. De préférence le procédé de soudage à l'arc électrique est du type MIG/MAG. On peut alors avoir avantageusement un laser de puissance délivrée sur les conduits à souder inférieure ou égale à 6 kW, de préférence inférieure à 4 kW, et une torche MIG de puissance supérieure à 8 kW.

Le coût du dispositif de soudage utilisé pour mettre en oeuvre le procédé de l'invention est par ailleurs réduit tandis que le kW produit à l'arc électrique est nettement moins onéreux que le kW produit par le laser. Le procédé est donc économiquement très avantageux tout en offrant une vitesse de soudage très rapide notamment de plus de 3 m/min.

De préférence, on met en oeuvre le procédé avec une puissance laser comprise dans la plage de 2 à 4 kW, la vitesse de soudage obtenue étant alors d'environ 2,5 à 4 m/min. Le procédé est alors très fiable, économique et moins encombrant tout en proposant une vitesse de soudage avantageuse.

Le procédé selon l'invention permet avantageusement d'éliminer les inconvénients pouvant être liés aux conditions d'accostage (alignement des conduits). En effet, si au niveau du plan de joint entre les conduits, il existe un jour, le faisceau laser peut passer au travers, le procédé MIG intervenant de manière simultanée au laser permet de démarrer la fusion ce qui n'aurait pu avoir lieu si le laser avait été seul ou si le procédé MIG était intervenu de manière décalée.

De plus, lorsqu'il existe un défaut d'alignement des conduits, le procédé MIG permet de lisser le profil de pénétration alors que le procédé laser utilisé seul en ce cas aurait abouti à un profil de pénétration en escalier.

L'invention a également trait à un dispositif de soudage pour la mise en oeuvre du procédé selon l'invention tel que défini dans la revendication 3.

Selon l'invention, au cours de la passe de pénétration réalisée sous l'action combinée du laser et de l'arc électrique, on peut régler indépendamment les uns des autres, la position du point de focalisation du faisceau laser, l'intervalle entre le point de focalisation du faisceau laser et la position du point d'impact de l'arc électrique ainsi que la position angulaire de la torche de soudage MIG par rapport au faisceau laser. Le dispositif comporte, selon l'invention, des moyens de réglage en hauteur du faisceau laser, des moyens de déplacement de la torche MIG pour déplacer le point d'impact de l'arc électrique et des moyens de déplacement angulaire de la torche MIG.

Ainsi, auparavant ces point, intervalle et position angulaire étaient définis préalablement au soudage de sorte qu'en cas de variation du point de focalisation du faisceau laser, un changement de l'intervalle entre le point de focalisation et le point d'impact de l'arc électrique était induit sans pouvoir y remédier, ce qui n'était pas souhaitable. De plus au cours du déplacement orbital du dispositif de soudage autour des conduites, il est intéressant de modifier la position angulaire de la torche MIG par rapport au faisceau laser pour définir la largeur du joint.

Selon l'invention, le point de focalisation du faisceau laser est ajustable dans une plage de +/- 5mm, l'intervalle entre le point de focalisation et le point d'impact de l'arc électrique est dans la plage de -5 mm à +5 mm de part et d'autre du point de focalisation du laser et la plage angulaire dans laquelle varie la torche MIG par rapport au faisceau laser est de 5° à 45°.

Le réglage du point de focalisation du faisceau laser, de l'intervalle entre le point de focalisation et la position du point d'impact et/ou de la position angulaire de la torche MIG permet de rattraper les variations survenant au cours de la passe de pénétration, du fait de jeux et/ou de défauts d'alignement pouvant apparaître au niveau du plan de joint et du fait de l'influence de la gravité en fonction de la position orbitale autour des conduits sur la tenue du bain de fusion, pour revenir aux conditions de soudage optimales définies

On peut jouer ainsi sur le pouvoir de pénétration global du dispositif de soudage et sur le profil de joint de manière à améliorer l'ensemble.

Ainsi, selon l'invention, avant chaque soudage, on peut programmer pour chacune des variables (point de focalisation du faisceau laser, intervalle entre le point de focalisation du faisceau laser et le point d'impact de l'arc électrique et position angulaire de la torche MIG) des valeurs de consigne pour chacune des positions orbitales du dispositif de soudage autour des conduits (la position angulaire pouvant être notamment donnée par un capteur embarqué sur la tête de soudage).

A cet effet, le dispositif, selon l'invention, comporte des moyens de programmation des valeurs de consigne et des moyens de reconnaissance de la position orbitale du dispositif de soudage tel qu'un capteur angulaire embarqué sur le dispositif et des moyens de commande des moyens de réglage en hauteur du faisceau laser, des moyens de déplacement de la torche MIG pour déplacer le point d'impact de l'arc électrique et des moyens de déplacement angulaire de la torche MIG.

On régule, selon l'invention, en temps réel chacune des variables en fonction d'informations issues de la détection et de l'analyse des conditions d'accostage en temps réel au cours de la passe de pénétration.

Selon l'invention, il est possible pendant le soudage orbital de plus ou moins concentrer les puissances laser et MIG en un seul point, ce qui permet de répartir la densité de puissance et de faire varier notamment le pouvoir de pénétration ainsi que le mouillage extérieur du bain de fusion et ce, avec des paramètres liés au faisceau laser et à l'arc électrique MIG constant.

A cet effet, le dispositif comporte, selon l'invention, des moyens de détection et d'analyse des conditions d'accostage en temps réel au cours de la passe de pénétration et des moyens de commande en temps réel des moyens de réglage en hauteur du faisceau laser, des moyens de déplacement de la torche MIG pour déplacer le point d'impact de l'arc électrique et régler l'intervalle entre le point de focalisation du faisceau laser et le point d'impact de l'arc électrique et des moyens de déplacement angulaire de la torche MIG.

Cette capacité de modification ainsi que la programmation possible en fonction de la position orbitale ou la régulation en temps réel en fonction des conditions d'accostages détectées en temps réel, permettent de garantir une qualité (compacité) accrue, notamment lors de la réalisation de la passe de pénétration ainsi que pour les passes de recouvrement ultérieures.

On décrira maintenant l'invention plus en détail en référence au dessin en annexe dans lequel:
La figure 1 représente une vue en perspective d'un dispositif de soudage selon l'invention hors soudage;
La figure 2 représente une vue en coupe dans le plan de joint d'un dispositif de soudage selon l'invention au cours d'un cycle de soudage ;
La figure 3 représente une vue en coupe d'un bain de fusion au niveau d'un chanfrein lors d'un soudage au laser seul et
La figure 4 représente une vue en coupe similaire à la figure 3 mais lors d'un soudage selon l'invention.

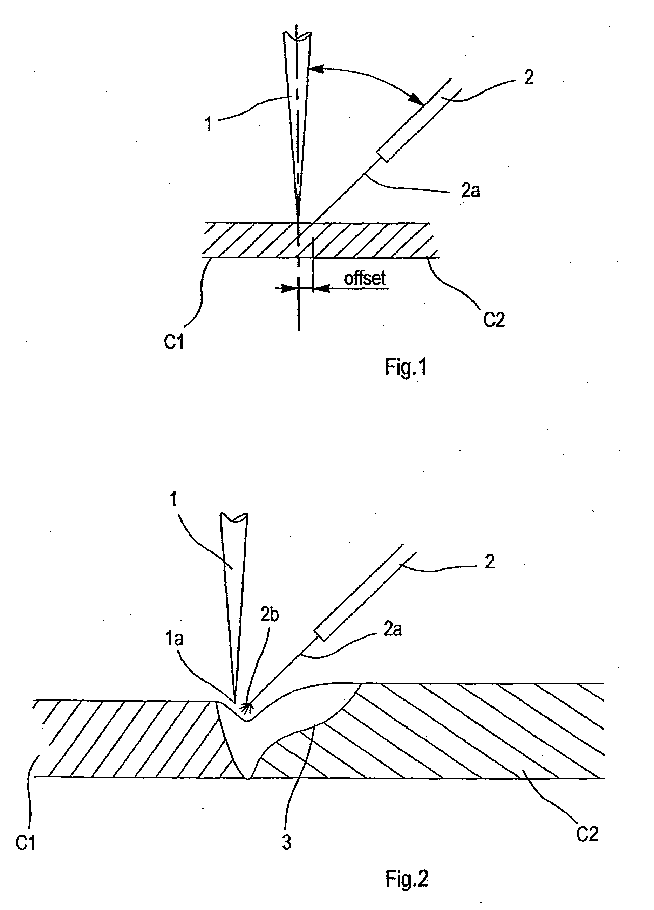

Comme on peut le voir à la figure 1, le dispositif selon l'invention présente au moins des moyens de génération d'un faisceau laser 1 et au moins une fibre optique guidant celui-ci jusqu'au plan de joint entre deux conduits C1 et C2.

Le faisceau laser 1 intervient sensiblement perpendiculairement au talon du chanfrein créé entre les conduits C₁, C₂. Le dispositif comporte en outre une torche MIG 2 pourvue d'une électrode fusible 2a et de moyens de distribution d'un gaz de protection. La torche MIG 2 est positionnée angulairement décalée par rapport au faisceau laser 1 selon un angle α de sorte que le point d'impact de l'arc électrique 2b se trouve voisin du point de focalisation 1a du faisceau laser 1 pour générer un bain de fusion 3 unique comme cela est visible à la figure 2.

L'intervalle entre le point de focalisation 1a du faisceau laser 1 et le l'arc électrique (sensiblement l'extrémité de l'électrode fusible 2a) est appelé « Offset ».

Le dispositif comporte selon l'invention des moyens de réglage en hauteur du faisceau laser 1, des moyens de déplacement de la torche MIG 2 pour déplacer le point d'impact de l'arc électrique et des moyens de déplacement angulaire de la torche MIG 2.

Le point de focalisation 1a du faisceau laser 1 est selon l'invention ajustable par en hauteur par rapport au fond du chanfrein dans une plage de +/- 5mm.

L'intervalle « offset » entre le point de focalisation 1a et le point d'impact de l'arc électrique 2b se trouve selon l'invention dans la plage de -5 mm à +5 mm de part et d'autre du point de focalisation du laser 1 et la plage angulaire dans laquelle varie l'angle a la torche MIG par rapport au faisceau laser est de 5° à 45°.

Le réglage du point de focalisation du faisceau laser, de l'intervalle entre le point de focalisation et la position du point d'impact et/ou de la position angulaire de la torche MIG permet de rattraper les variations survenant au cours de la passe de pénétration, du fait de jeux et/ou de défauts d'alignement pouvant apparaître au niveau du plan de joint et du fait de l'influence de la gravité en fonction de la position orbitale autour des conduits sur la tenue du bain de fusion, pour revenir aux conditions de soudage optimales définies

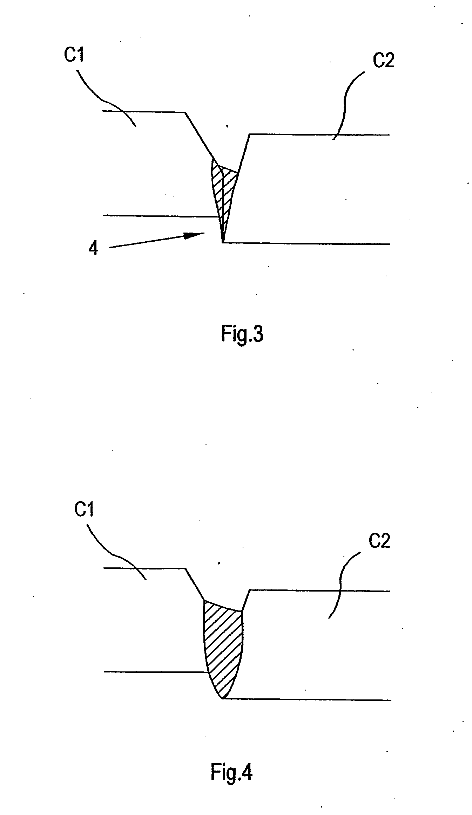

Ainsi, comme on peut le voir à la figure 3, lorsqu'un dispositif au laser seul est utilisé et qu'au niveau du chanfrein, il y a un désalignement, il survient un effet de marche ou escalier 4.

A la figure 4, on peut voir que pour un même défaut d'alignement, le procédé de soudage selon l'invention permet grâce à la génération d'un bain de fusion unique d'atténuer l'effet escalier 4'.

L'invention n'est pas limitée aux exemples représentés mais couvre également toutes les variantes entrant dans le champ de protection défini dans les revendications.

## Revendications

1. Procédé de soudage, en particulier de pièces tubulaires telles que des conduits métalliques mis bout à bout pour former des canalisations métalliques du type pipeline, dans lequel on réalise la passe de pénétration par l'extérieur, dans lequel on crée un bain de fusion unique sous l'action simultanée d'au moins un faisceau laser (1) transmis par fibre optique et d'au moins un arc électrique sous protection gazeuse généré à partir d'une électrode fusible (2a) constituant le matériau d'apport, **caractérisé en ce qu'**on règle indépendamment les uns des autres, la position du point de focalisation du faisceau laser (1), l'intervalle entre le point de focalisation (1a) du faisceau laser (1) et la position du point d'impact (2b) de l'arc électrique ainsi que la position angulaire de la torche de soudage MIG par rapport au faisceau laser, **en ce que** on ajuste le point de focalisation du faisceau laser dans une plage de +/- 5mm au-dessus ou en dessous du fond du chanfrein formé par les deux conduits, l'intervalle entre le point de focalisation et le point d'impact de l'arc électrique variant dans la plage de -5 mm à +5 mm de part et d'autre du point de focalisation du laser, tandis que la plage angulaire (α) dans laquelle varie la torche MIG par rapport au faisceau laser est de 5° à 45° **en ce qu'**on régule en temps réel chacune des variables en fonction d'informations issues de la détection et de l'analyse des conditions d'accostage en temps réel au cours de la passe de pénétration et **en ce que**, avant le début du soudage, on programme pour chacune des variables point de focalisation du faisceau laser, intervalle entre le point de focalisation du faisceau laser et le point d'impact de l'arc électrique et la position angulaire de la torche MIG des valeurs de consigne pour chacune des positions orbitales du dispositif de soudage autour des conduits.

2. Procédé selon la revendication 1 , **caractérisé en ce qu'**on réalise la passe de pénétration à une puissance laser délivrée sur les conduits à souder inférieure ou égale à 6 kW et avec une torche de soudage à l'arc électrique telle qu'une torche MIG de puissance supérieure à 8 kW.

3. Dispositif de soudage pour la mise en oeuvre du procédé selon l'une des revendications 1 ou 2, comportant au moins des moyens de génération d'un faisceau laser (1) et au moins une fibre optique guidant celui-ci jusqu'au plan de joint entre deux conduits, le faisceau laser (1) intervenant confondu avec le plan de joint (P) créé entre les conduits (C1, C2) ainsi qu'une torche de soudage (2) à l'arc électrique telle qu'une torche MIG pourvue d'une électrode fusible (2a) et de moyens de distribution d'un gaz de protection,
la torche de soudage (2) à l'arc électrique est positionnée angulairement décalée par rapport au faisceau laser (1) de sorte que le point d'impact (2b) de l'arc électrique se trouve voisin du point de focalisation du faisceau laser (1) pour former un bain de fusion unique lors de la passe de pénétration, **caractérisé en ce qu'**il comporte des moyens de réglage en hauteur du faisceau laser, des moyens de déplacement de la torche MIG pour déplacer le point d'impact de l'arc électrique et des moyens de déplacement angulaire de la torche MIG, des moyens de programmation des valeurs de consigne, des moyens de reconnaissance de la position orbitale du dispositif de soudage tel qu'un capteur angulaire embarqué sur le dispositif, **caractérisé en ce que** des moyens de détection et d'analyse des conditions d'accostage en temps réel au cours de la passe de pénétration et des moyens de commande en temps réel des moyens de réglage en hauteur du faisceau laser.

## Claims

1. Welding method, in particular for tubular parts such as metal conduits that are abutted in order to form pipeline type metal pipes, in which the penetrating pass is made on the outside, in which is created a single melting bath under the simultaneous action of at least one laser beam (1) transmitted by optical fibre and at least one gas-protected electric arc generated from a consumable electrode (2a) constituting the filler material, **characterised in that** the position of the focus point of the laser beam (1), the gap between the focus point (1a) of the laser beam (1) and the position of the point of impact (2b) of the electric arc, as well as the angular position of the MIG welding torch relative to the laser beam, are adjusted independent of each other, **in that** the focus point of the laser beam is adjusted in a range of +/-5mm above or below the bottom of the chamfer formed by the two conduits, with the gap between the focus point and the point of impact of the electric arc varying in the range of -5 mm to +5 mm on both sides of the focus point of the laser, while the angular range (α) within which the MIG torch varies relative to the laser beam is 5° to 45° **in that** each of the variables is regulated in real time according to information emanating from the detection and the analysis of the squeeze conditions in real time during the penetrating pass and **in that**, before each welding, set points are programmed for each of the variables (focus point of the laser beam, gap between the focus point of the laser beam and the point of impact of the electric arc and the angular position of the MIG torch) in each of the orbital positions of the welding device around the conduits.

2. Method according to claim 1, **characterised in that** the penetrating pass is made at a laser power delivered on the conduits to be welded of less than or equal to 6 kW and with an electric arc welding torch, such as an MIG torch of power exceeding 8 kW.

3. Welding device for the implementation of the method according to one of claims 1 or 2, comprising at least means for generating a laser beam (1) and at least an optical fibre guiding the latter to the parting plane between two conduits, (C1, C2) as well as an electric arc welding torch (2) such as an MIG torch provided with a consumable electrode (2a) and means of distribution of a protective gas, wherein the electric arc welding torch (2) is angularly sluifted in relation to the laser beam (1) in such a way that the point of impact (2b) of the electric arc is close to the focus point of the laser beam (1) in order to form a single melting bath on the penetrating pass, **characterised in that** it contains means of adjustment of the laser beam in height, means of displacement of the MIG torch for displacing the point of impact of the electric arc and means of angular displacement of the MIG torch, means of programming set values, means of recognizing the orbital position of the welding device, such as an angle sensor loaded on the device, means of detection and analysis of the squeeze conditions in real time during the penetration pass means of control of the means of adjustment of the laser beam in height, and means of displacement of the MIG torch for displacing the point of impact of the electric arc and means of angular displacement of the MIG torch.

## Patentansprüche

1. Verfahren zum Schweißen insbesondere von röhrenförmigen Teilen, wie etwa Metallrohren, die aneinander gereiht werden, um metallische Rohrleitungen nach Art einer Pipeline zu bilden, wobei der Durchdringungsarbeitsgang von außen durchgeführt wird, wobei ein einziges Schweißbad unter der gleichzeitigen Einwirkung mindestens eines Laserstrahls (1), der per Lichtleitfaser übertragen wird, und mindestens eines Lichtbogens unter Gasschutz, der aus einer abschmelzenden Elektrode (2a) erzeugt wird, welche die Materialzufuhr bildet, erstellt wird, **dadurch gekennzeichnet, dass** die Position des Fokussierungspunktes des Laserstrahls (1), der Zwischenraum zwischen dem Fokussierungspunkt (1a) des Laserstrahls (1) und der Position des Auftreffpunktes (2b) des Lichtbogens, sowie die Winkelposition des MIG-Schweißbrenner im Verhältnis zum Laserstrahl unabhängig voneinander eingestellt werden, dass der Fokussierungspunkt des Laserstrahls in einem Bereich von ±5 mm über oder unter dem Boden der Schrägkante, die durch die beiden Rohre gebildet wird, nachgestellt wird, wobei der Zwischenraum zwischen dem Fokussierungspunkt und dem Auftreffpunkt des Lichtbogens in dem Bereich von -5 mm bis +5 mm auf beiden Seiten des Fokussierungspunktes des Lasers variiert, während der Winkelbereich (α), in dem der MIG-Brenner im Verhältnis zum Laserstrahl variiert, von 5° bis 45° reicht, dass jede der Variablen in Abhängigkeit von Informationen aus der Erfassung und der Analyse der Anstoßbedingungen in Echtzeit während des Durchdringungsarbeitsganges in Echtzeit reguliert wird, und dass vor Beginn der Schweißarbeit für jede der Variablen (Fokussierungspunkt des Laserstrahls, Zwischenraum zwischen dem Fokussierungspunkt des Laserstrahls und dem Auftreffpunkt des Lichtbogens und Winkelposition des MIG-Brenners) Sollwerte für jede der Kreispositionen der Schweißvorrichtung um die Rohre herum programmiert werden.

2. Verfahren nach Anspruch 1, **dadurch gekennzeichnet, dass** der Durchdringungsarbeitsgang mit einer Laserleistung, die an die zu verschweißenden Rohre abgegeben wird und kleiner oder gleich 6 kW ist, und mit einem Lichtbogen-Schweißbrenner, wie etwa einem MIG-Brenner mit einer Leistung von mehr als 8 kW, ausgeführt wird.

3. Schweißvorrichtung zum Umsetzen des Verfahrens nach einem der Ansprüche 1 oder 2, umfassend mindestens Mittel zum Erzeugen eines Laserstrahls (1) und mindestens eine Lichtleitfaser, die diesen bis zur Stoßfläche zwischen zwei Rohren führt, wobei der Laserstrahl (1) mit der Stoßfläche (P) zusammenfallend eintritt, die zwischen den Rohren (C1, C2) erstellt wird, sowie einen Lichtbogen-Schweißbrenner (2), wie etwas einen MIG-Brenner, der mit einer abschmelzenden Elektrode (2a) und mit Mitteln zum Verteilen eines Schutzgases versehen ist, wobei der Lichtbogen-Schweißbrenner (2) im Verhältnis zum Laserstrahl (1) winkelmäßig versetzt positioniert ist, so dass der Auftreffpunkt (2b) des Lichtbogens sich neben dem Fokussierungspunkt des Laserstrahls (1) befindet, um ein einziges Schweißbad bei dem Durchdringungsarbeitsgang zu bilden, **dadurch gekennzeichnet, dass** sie Mittel zum Einstellen der Höhe des Laserstrahls, Mittel zum Verschieben des MIG-Brenners, um den Auftreffpunkt des Lichtbogens zu verschieben, und Mittel zum winkelmäßigen Verschieben des MIG-Brenners, Mittel zum Programmieren der Sollwerte, Mittel zum Erkennen der Kreisposition der Schweißvorrichtung, wie etwa einen Winkelsensor, der in die Vorrichtung integriert ist, Mittel zum Erfassen und Analysieren der Anstoßbedingungen in Echtzeit während des Durchdringungsarbeitsganges, Mittel zum Steuern in Echtzeit der Mittel zum Einstellen der Höhe des Laserstrahls und Mittel zum Verschieben des MIG-Brenners, um den Auftreffpunkt des Lichtbogens zu verschieben, und Mittel zum winkelmäßigen Verschieben des MIG-Brenners umfasst.
